# EUROPÄISCHE PATENTSCHRIFT

(11) **EP 4 587 307 B1**
(45) Veröffentlichungstag und Bekanntmachung des Hinweises auf die Patenterteilung: **09.09.2026**
(21) Anmeldenummer: 23817737.2
(22) Anmeldetag: 04.12.2023
(51) Int. Cl.: B60T 13/68

(54) **DRUCKSENSOR-BASIERTE REGELUNG DER HINTERACHSE IN EINEM BREMSSYSTEM**
PRESSURE SENSOR-BASED CONTROL OF THE REAR AXLE IN A BRAKE SYSTEM
COMMANDE DE L'ESSIEU ARRIÈRE BASÉE SUR UN CAPTEUR DE PRESSION DANS UN SYSTÈME DE FREINAGE

(30) Priorität: 21.12.2022 DE 102022134254
(43) Veröffentlichungstag der Anmeldung: 23.07.2025
(73) Patentinhaber: KNORR-BREMSE Systeme für Nutzfahrzeuge GmbH, 80809 München (DE)
(72) Erfinder: RÖTHER, Friedbert, 74389 Cleebronn (DE); NIEDERMEIER, Stefan, 94542 Haarbach (DE); KRAHL, Martin, 71640 Ludwigsburg (DE); KUNERT, Kevin, 71277 Rutesheim (DE)
(86) Internationale Anmeldenummer: PCT/EP2023/084147
(87) Internationale Veröffentlichungsnummer: WO 2024/132476

(56) Entgegenhaltungen:
- EP-B1- 3 507 154
- DE-A1- 102010 020 267

## Beschreibung

Die vorliegende Erfindung befasst sich mit der Regelung von Bremsen an Hinterachsen, welche in einem Bremssystem mit Hilfe eines Drucksensors vorgenommen wird.

Bei Nutzfahrzeugen, insbesondere bei Lastkraftwagen, ist die Verwendung von Antiblockiersystemen (ABS) üblich.

Aus dem Stand der Technik ist beispielsweise das Dokument DE 10 2019 202 770 A1 bekannt, welches ein Betriebsverfahren von Antiblockiersystemen eines Fahrzeugs umfasst, um einen Straßenzustand zu ermitteln. Ein erster Bremswert wird erfasst, nachdem das Antiblockiersystem aktiviert wurde. Das Antiblockiersystem kann dann deaktiviert werden. Dann kann ein zweiter Bremsdruck erfasst werden, und schlussendlich kann ein Druckunterschied zwischen dem ersten und zweiten Bremsdruck erfasst werden. Mit diesem Druckunterschied kann ein Straßenzustand ermittelt werden.

In einem regulären Antiblockiersystem kann das Blockieren der Räder verhindert oder zumindest reduziert werden, bei einer Schnellbremsung oder einer Notbremsung findet hier eine Druckregelung an den Bremszylindern statt (nicht allerdings bei einer normalen Betriebsbremsung).

Ein aufwändigeres System ist das sogenannte elektronische Bremssystem (EBS-System), hier erfolgt die gesamte Regelung aller Achsen und Räder elektronisch. Ein Fahrerbremswunsch wird hier beispielsweise mit einem Fußbremsmodul über Wegsensierung (Messung, wie weit Fußbremsmodul betätigt wird, mit Hilfe von Sensoren) ermittelt, und das Wegsignal (gemessener Weg, mit welchem das Fußbremsmodul betätigt ist) wird über ein Bremsmanagementsystem weiterverarbeitet. Hier sind verschiedene Softwarefunktionen möglich, beispielsweise ABS (Antiblockiersystem), ESP (elektronisches Stabilitätsprogramm), ASR (Antischlupfregelung), Koppelkraftregelung, sowie lastabhängige Regelung. Bei einer normalen Bremsung findet an allen Achsen eine Druckregelung statt.

Im Vergleich zum ABS-System ist ein EBS-System erheblich aufwändiger und teurer. Es wäre allerdings wünschenswert, auch bei normalen ABS-Systemen eine lastabhängige Regelung bei jeder Bremsung, insbesondere auch der Hinterachse, vornehmen zu können.

EP 3 507 154 B1 beschreibt ein elektronisch steuerbares pneumatisches Bremssystem in einem Fahrzeug mit Radbremsen, denen von Achsmodulatoren ein Betriebsbrems-Bremsdruck vorgebbar ist, und einem Fußbremsventil zum pneumatischen Vorgeben eines Betriebsbrems-Steuerdruckes. Weiter ist eine Bypass-Ventilanordnung vorgesehen, die dem Fußbremsventil in einer ersten bzw. zweiten Schaltstellung unterschiedlich hohe Druckniveaus als elektropneumatische Vorgabe vorgibt.

DE 10 2010 020267 A1 beschreibt eine druckmittelbetätigte Bremseinrichtung, bei der abhängig von der jeweiligen Bremsdruckanforderung (Niederdruckbereich oder Hochdruckbereich) jeweils unterschiedliche Strömungswege des Druckmittels mittels Ventileinrichtungen eingestellt werden.

Es ist eine Aufgabe der vorliegenden Erfindung, bei einem Nutzfahrzeug eine lastabhängige Regelung der Hinterachse bei jeder Bremsung zu ermöglichen, ohne jedoch ein gesamtes EBS-System zu realisieren.

Diese Aufgabe wird durch ein Bremssystem gemäß Anspruch 1 gelöst. Weitere vorteilhafte Ausgestaltungen der vorliegenden Erfindung sind Gegenstand der Unteransprüche.

Ein erfindungsgemäßes Bremssystem für ein Fahrzeug ist in dem Anspruch 1 definiert. Das Bremssystem weist auf: Eine erste Druckquelle, sowie ein Fußbremsventil zur Aufnahme eines Verzögerungswunsches durch den Fahrer, welches mit der ersten Druckquelle verbunden ist. Das Fußbremsventil ist wiederum mit einem ersten Bremsmodul pneumatisch verbunden, mit diesem wiederum ist mindestens ein erster Bremsaktuator verbunden. Vorzugsweise sind zwei erste Bremsaktuatoren für die Hinterachse vorgesehen, einer für jede Seite.

Das erste Bremsmodul ist dazu angepasst, eine Bremskraft des mindestens einen Bremsaktuators bei jeder Bremsung zu regeln. Das bedeutet, dass nicht nur bei einer Schnellbremsung oder einer Notbremsung eine Regelung stattfinden soll, sondern bei jeder Bremsung. Ferner beinhaltet das erfindungsgemäße Bremssystem mindestens einen ersten Drucksensor, welcher dazu angepasst ist, den ausgesteuerten Druck des Fußbremsventils zu messen.

So kann bei jeder Bremsung eine Regelung vorgenommen werden, und der Fahrerwunsch kann elektronisch auch die Bremskraft auf der Hinterachse geregelt werden (und der Verzögerungswunsch des Fahrers wird mit berücksichtigt). Ein kostenintensiveres Fußbremsmodul, bei welchem eine Wegsensierung stattfindet (damit ein elektrisches Signal gemessen werden kann), kann hier also entfallen - aus diesem Grund ist der Drucksensor vorgesehen, welcher bei jeder Bremsung den Fahrerwunsch prüft, indem der ausgeregelte Druck des Fußbremsventils gemessen und entsprechend für die Regelung verwendet wird. Gegenüber einem regulären ABS-System kann hier also der Vorteil erzielt werden, dass hier insbesondere die Hinterachse nicht nur bei bestimmten Bremsungen geregelt werden kann, sondern bei allen Bremsungen. Somit ist auch eine ladungsabhängige Regelung der Hinterachse möglich. Es wird ermöglicht, wie bei einem normalen EBS-System den Fahrerwunsch zu ermitteln, allerdings durch eine Druckmessung des ausgeregelten Drucks des Fußbremsventils, und eine Druckregelung der Hinterachse kann so ermöglicht werden. Durch diese spezielle Druckregelung der Hinterachse können mehrere Softwarefunktionen ermöglicht werden. Es können Funktionen eines EBS-Systems in ein ABS-System integriert werden, ohne dass hier die höheren Kosten eines EBS-Systems aufzuwenden wären.

Das Bremssystem weist weiterhin eine Achslastbestimmungsvorrichtung auf, welche dazu angepasst ist, eine Achslast zu bestimmen. Die Achslastbestimmungsvorrichtung ist mit dem ersten Bremsmodul verbunden, und das erste Bremsmodul ist dazu angepasst, die Achslast bei der Regelung zu berücksichtigen. Beispielsweise ist die Achslastbestimmungsvorrichtung ein Achslastsensor. Die Achslast kann allerdings auch durch verschiedene Berechnungsschritte auf Basis anderer Daten berechnet werden. So wird die Möglichkeit der lastabhängigen Regelung der Hinterachse erheblich verbessert.

Vorzugsweise ist der mindestens eine erste Bremsaktuator, der durch Bremskraft regelbar ist, an der Hinterachse des Fahrzeugs vorgesehen.

So können sämtliche oben beschriebene Vorteile an der Hinterachse des Fahrzeugs realisiert werden.

Vorzugsweise ist der erste Drucksensor mit dem ersten Bremsmodul verbunden, und die durch den ersten Drucksensor gemessenen Druckwerte sind in das Bremsmodul einlesbar. So kann für die Hinterachse auch eine elektronische Regelung durch das erste Bremsmodul vorgenommen werden.

Vorzugsweise kann der Verzögerungswunsch mit Hilfe eines Magnetventils oder Relaisventils durch zwei erste Bremsaktuatoren (an der Hinterachse) ausgesteuert werden, wobei das jeweils eine Magnetventil oder Relaisventil vorzugsweise im ersten Bremsmodul integriert sind. Das erste Bremsmodul beinhaltet vorzugsweise elektronische Regelungskomponenten, allerdings auch die entsprechenden Ventile, bei welcher der Druck an die entsprechenden Bremsaktuatoren, beispielsweise Bremszylinder, aussteuerbar ist. Dadurch können mindestens drei Kabelräume, die für die Magnetansteuerung von Ventilen in einem herkömmlichen System benötigt würden, eingespart werden.

Zwischen einem Magnetventil oder Relaisventil und dem entsprechenden Bremsaktuator ist jeweils ein weiterer, zweiter Drucksensor vorgesehen, welcher dazu angepasst ist, den von Magnetventil oder Relaisventil ausgesteuerten Druck zu messen. Die zweiten Drucksensoren sind ebenfalls mit dem ersten Bremsmodul verbunden und können entsprechende gemessene Druckwerte an das erste Bremsmodul liefern. So kann eine druckbasierte Regelung der Hinterachse erfolgen (geschlossener Regelkreis), basierend auf Messwerten des Fußbremsmoduls über den ersten Drucksensor (Fahrerwunsch), sowie zweiten Drucksensoren, welche die ausgesteuerten Drücke an den Bremsaktuatoren der Hinterachse messen. Trotz Regelung der Bremskräfte der Hinterachse kann immer auf den Fahrerwunsch eingegangen werden, also auch den Verzögerungswunsch.

Vorzugsweise ist das erste Bremsmodul dazu angepasst, die Regelung mit Hilfe von Softwarefunktion zu realisieren, wobei vorzugsweise ein Antiblockiersystem, ein elektronisches Stabilitätsprogramm und/oder eine lastabhängige Regelung realisierbar sind.

Vorzugsweise weist das Bremssystem ferner eine zweite Druckquelle auf, welche ebenfalls mit dem Bremsventil verbunden ist. Ferner ist ein zweites Bremsmodul vorhanden, welches ebenfalls mit dem Fußbremsmodul verbunden ist, und weiter mindestens ein weiterer Bremsaktuator, welcher mit dem zweiten Bremsmodul verbunden ist, wobei das zweite Bremsmodul dazu angepasst ist, die Bremskraft des mindestens einen weiteren Bremsaktuators zu regeln. Dies kann beispielsweise die Vorderachse betreffen. Zwischen dem zweiten Bremsmodul und mindestens einem weiteren Bremsaktuator ist jeweils ein Druckregelventil vorgesehen. Dieses kann zur Feinregelung der Drücke an der Vorderachse verwendet werden. Somit wird also ein zweiter Bremskreis realisiert.

Vorzugsweise ist der mindestens eine erste Drucksensor in einem ersten Bremsmodul integriert. So kann weiterhin Verkabelungsaufwand vermieden werden, des weiteren sind so sehr kompakte und platzsparende Systeme möglich.

Die vorliegende Erfindung wird nun unter Bezugnahme auf die vorliegenden Zeichnungen genauer beschrieben.
- Fig. 1: zeigt ein erfindungsgemäßes Bremssystem, wobei die Druckmessung durch den ersten Drucksensor im Bremskreis für die Vorderachse vorgesehen ist.
- Fig. 2: zeigt ein erfindungsgemäßes Bremssystem, wobei die Druckmessung durch den ersten Drucksensor im Bremskreis für die Hinterachse vorgesehen ist.

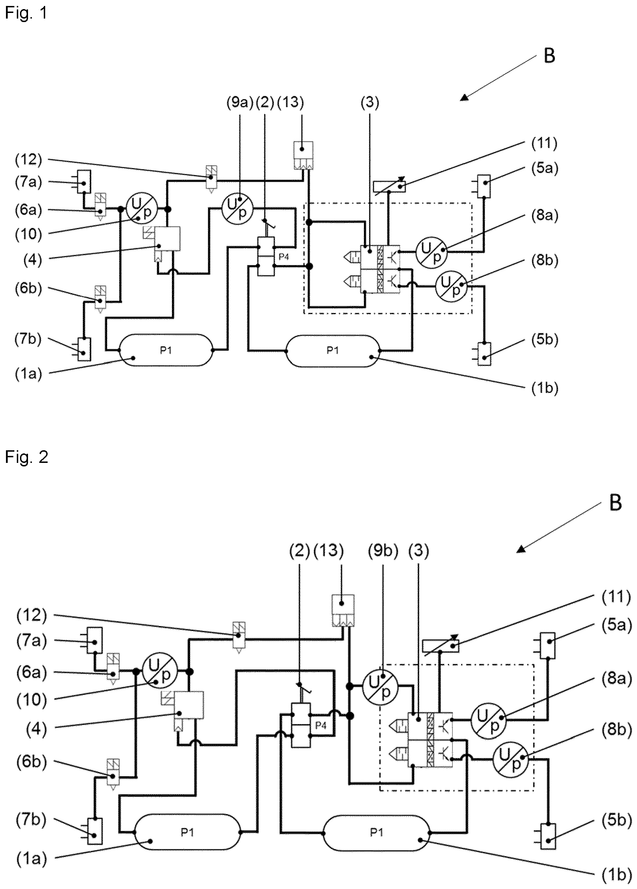

Fig. 1 zeigt einen Aufbau eines Bremssystems B, wobei hier zwei Bremskreise vorgesehen sind, einer für die Vorderachse und einer für die Hinterachse. Eine zweite Druckquelle 1a ist mit dem Fußbremsventil 2 verbunden. Der von der zweiten Druckquelle 1a stammende Druck kann vom Fußbremsventil 2 an ein zweites Bremsmodul 4 weitergegeben werden. Zwischen dem Fußbremsventil 2 und dem zweiten Bremsmodul 4 ist ein erster Drucksensor 9a vorgesehen. Dieser erste Drucksensor 9a misst den Verzögerungswunsch des Fahrers, welchen dieser durch das Fußbremsventil 2 angibt. Hinter dem zweiten Bremsmodul 4 ist ein weiterer, dritter Drucksensor 10 vorgesehen, dieser misst den geregelten Druck der Vorderachse, da das zweite Bremsmodul 4 mit entsprechenden Bremszylindern 7a und 7b der Vorderachse verbunden ist. Zwischen dem dritten Drucksensor 10 und den entsprechenden Bremszylindern 7a und 7b sind noch entsprechende Druckregelventil 6a und 6b vorgesehen, diese übernehmen die Feinregelung des Bremsdrucks an der Vorderachse.

Eine erste Druckquelle 1b ist ebenfalls mit dem Fußbremsventil 2 versehen. Der vom Fußbremsventil 2 ausgeregelte Druck wird in diesem Bremskreis an ein erstes Bremsmodul 3 geliefert. Das erste Bremsmodul 3 enthält den gemessenen Druckwert des ersten Drucksensors 9a. Vom ersten Bremsmodul 3 wird der Druck weiter an die ersten Bremsaktuatoren 5a und 5b weitergegeben, diese sind für die Hinterachse zuständig. Zwischen dem ersten Bremsmodul 3 und den entsprechenden Bremszylindern 5a und 5b für die Hinterachse sind noch entsprechende zweite Drucksensoren 8a und 8b geschaltet, welche den ausgeregelten Druck für die Bremsaktuatoren 5a und 5b der Hinterachse messen. Auch diese werden von dem zweiten Bremsmodul 4 eingelesen, so dass hier eine entsprechende Regelung erfolgen kann. Mit dem zweiten Bremsmodul 4 ist noch eine Achslastbestimmungsvorrichtung 11 vorgesehen, hier als Achslastsensor ausgebildet. Ferner ist ein Trailerkontrollventil 13 vorgesehen, dieses nimmt den ausgeregelten Druck des Fußbremsventils 2 auf. Ferner ist das Trailerkontrollventil mit dem ersten Bremsmodul 3 verbunden. Ferner ist das Trailerkontrollventil 13 über ein Trailer-Druckregelventil 12 auch mit dem zweiten Bremsmodul 4 verbunden, welches für die Vorderachse vorgesehen ist. Somit sind auch die Bremsen eines Trailers entsprechend ansteuerbar, wenn das Bremssystem des Trailers an das Trailerkontrollventil 13 angeschlossen wird.

Fig. 2 zeigt eine zweite Ausführungsform der vorliegenden Erfindung, bei welcher sämtliche Teile fast identisch zur ersten Ausführungsform sind. Hier ist der erste Drucksensor 9b zwischen dem Fußbremsventil 2 sowie dem ersten Bremsmodul 3 vorgesehen. Hier erfolgt die Druckmessung des Fahrerwunsches bzw. des Verzögerungswunsches zwischen dem Fußbremsventil 2 sowie dem ersten Bremsmodul 3, welches der Hinterachse zugeordnet ist.

Der Fahrerwunsch zur Fahrzeugverzögerung (in den Fig. 1 und 2 mit P4 bezeichnet) wird durch die Betätigung des Fußbremsventils 2 erreicht, worauf das vom Versorgungsdruck 1a oder 1b gespeiste Ventil 2 den Druck in der Bremssteuerleitung P4 entsprechend erhöht, die zum ersten Bremsmodul 3 führt. Der Druck in der Bremssteuerleitung P4 wird von mindestens einem ersten Drucksensor gemessen, je nach Ausführungsform vom dem ersten Drucksensor 9a oder 9b. Bei der Ausführung in Fig. 1 ist der Drucksensor 9a zwischen dem Fußbremsventil 2 und dem zweiten Bremsmodul 4, welches der Vorderachse zugeordnet ist, angebracht. In Fig. 2 ist der erste Drucksensor 9b zwischen dem Fußbremsventil 2 und dem ersten Bremsmodul 3, welches der Hinterachse zugeordnet ist, vorgesehen.

Der erste Drucksensor 9a oder 9b kann allerdings auch im ersten Bremsmodul 3 oder im Fußbremsventil 2 integriert sein.

Das Signal des Drucksensors 9a oder 9b wird entsprechend in das erste Bremsmodul 3 eingelesen, und daraufhin wird eine Druck-Sollvorgabe für die Bremsleitung der Hinterachse ausgegeben. Dieser Druck wird durch Ansteuerung von Magnet- oder Bremsventil der Hinterachse über mindestens ein Relaisventil eingeregelt (hier nicht dargestellt), und weiterhin dann über jeweils einen zweiten Drucksensor 8a, 8b gemessen, welcher zwischen dem ersten Bremsmodul 3 und den entsprechenden Bremsaktuatoren 5a und 5b der Hinterachse vorgesehen. Damit ist eine druckbasierte Regelung der Hinterachse unter Berücksichtigung des Fahrerwunschs (durch den ersten Drucksensor 9a oder 9b) möglich, sowie auf Basis der Messwerte der Drucksensoren 8a, 8b, die den ausgeregelten Druck des ersten Bremsmoduls 3 messen. Aus diesem Grund können im ersten Bremsmodul 3 alle softwaretechnischen Möglichkeiten der Regelung umgesetzt werden. Mit Hilfe einer Achslastbestimmungsvorrichtung 11, hier als Achslastsensor vorgesehen, ist eine lastabhängige Regelung der Hinterachse auch in einem kostengünstigeren ABS-System möglich, ohne dass hier sämtliche Komponenten für ein EBS entsprechend realisiert werden müssten.

Aus diesem Grund können sowohl Montageaufwand als auch Kosten erheblich eingespart werden.

Die vorliegende Erfindung ist nicht auf die oben genannten Ausführungsformen beschränkt. Der erste Drucksensor 9a bzw. 9b kann auch direkt im Fußbremsventil 2 vorgesehen sein oder in anderen Bauteilen integriert sein.

### BEZUGSZEICHENLISTE

- B: Bremssystem
- F: Fahrzeug

- 1a: zweite Druckquelle (Druckversorgung Vorderachse)
- 1b: erste Druckquelle (Druckversorgung Hinterachse)
- 2: Fußbremsventil (FBV)
- 3: erstes Bremsmodul (Hinterachse + CPU)
- 4: zweites Bremsmodul (Vorderachse / Relaisventil / FAM)
- 5a: Bremsaktuator / Bremszylinder HA rechts
- 5b: Bremsaktuator / Bremszylinder HA links
- 6a: Druckregelventil (PCV) Vorderachse rechts
- 6b: Druckregelventil (PCV) Vorderachse links
- 7a: Bremszylinder VA rechts
- 7b: Bremszylinder VA links
- 8a: zweiter Drucksensor (geregelter Druck (P2) HA rechts)
- 8b: zweiter Drucksensor (geregelter Druck (P2) HA links)
- 9a: erster Drucksensor (Fahrerwunsch (P4) VA oberer Kreis)
- 9b: erster Drucksensor (Fahrerwunsch (P4) HA oberer Kreis (extern/integriert))
- 10: dritter Drucksensor (geregelter Druck (P2) Vorderachse)
- 11: Achslastbestimmungsvorrichtung (Achslastsensor/Achslastberechnung)
- 12: Trailer-Druckregelventil (TPCV)
- 13: Trailerkontrollventil (TCV)

## Patentansprüche

1. Bremssystem (B) für ein Fahrzeug (F), aufweisend:
eine erste Druckquelle (1b);
ein Fußbremsventil (2) zur Aufnahme eines Verzögerungswunsches durch den Fahrer, welches mit der ersten Druckquelle (1a) verbunden ist;
ein erstes Bremsmodul (3),
mindestens einen Bremsaktuator (5a, 5b), welcher mit dem Bremsmodul (3) verbunden ist,
wobei das erste Bremsmodul (3) dazu angepasst ist, eine Bremskraft des mindestens einen Bremsaktuators (5a, 5b) bei jeder Bremsung zu regeln, mindestens einen ersten Drucksensor (9a, 9b), welcher dazu angepasst ist, den ausgesteuerten Druck des Fußbremsventils (2) zu messen,
**dadurch gekennzeichnet, dass** das Bremssystem ferner eine Achslastbestimmungsvorrichtung (11) aufweist, welche dazu angepasst ist, eine Achslast zu bestimmen,
wobei die Achslastbestimmungsvorrichtung (11) mit dem Bremsmodul (3) verbunden ist, und das Bremsmodul (3) dazu angepasst ist, die Achslast bei der Regelung zu berücksichtigen.

2. Bremssystem (B) gemäß Anspruch 1, wobei der mindestens eine erste Bremsaktuator (5a, 5b), dessen Bremskraft regelbar ist, an der Hinterachse des Fahrzeugs vorgesehen ist.

3. Bremssystem (B) gemäß Anspruch 1 oder 2, wobei der erste Drucksensor (9a, 9b) mit dem ersten Bremsmodul (3) verbunden ist und durch den ersten Drucksensor (9a, 9b) gemessene Druckwerte in das Bremsmodul (3) einlesbar sind.

4. Bremssystem (B) gemäß einem der vorhergehenden Ansprüche, wobei der Verzögerungswunsch mit Hilfe jeweils eines Magnetventils (M) oder Relaisventils (R) durch zwei Bremsaktuatoren (5a, 5b) aussteuerbar ist, wobei das jeweils eine Magnetventil (M) oder Relaisventil (R) vorzugsweise im ersten Bremsmodul (3) integriert ist.

5. Bremssystem (B) gemäß Anspruch 4, wobei zwischen dem Magnetventil (M) oder Relaisventil (R) und dem entsprechenden Bremsaktuator (5a, 5b) jeweils ein weiterer zweiter Drucksensor (8a, 8b) vorgesehen ist, welcher dazu angepasst ist, den vom Magnetventil (M) oder Relaisventil (R) ausgesteuerten Druck zu messen, wobei die zweiten Drucksensoren (8a, 8b) mit dem ersten Bremsmodul (3) verbunden sind.

6. Bremssystem (B) gemäß einem der vorhergehenden Ansprüche, wobei das erste Bremsmodul (3) dazu angepasst ist, die Regelung mit Hilfe von Softwarefunktionen zu realisieren, wobei vorzugsweise ein Antiblockiersystem, ein Elektronisches Stabilitätsprogamm und/oder eine lastabhängige Regelung realisierbar sind.

7. Bremssystem (B) gemäß einem der vorhergehenden Ansprüche, wobei die Achslastbestimmungsvorrichtung (11) ein Achslastsensor ist.

8. Bremssystem (B) gemäß Anspruch 2, ferner aufweisend: eine zweite Druckquelle (1b), welche ebenfalls mit dem Fußbremsventil (2) verbunden ist, ein zweites Bremsmodul (4), welches ebenfalls mit dem Fußbremsventil (2) verbunden ist, mindestens einen weiteren Bremsaktuator (7a, 7b), welcher mit dem zweiten Bremsmodul (4) verbunden ist, wobei das zweite Bremsmodul (4) dazu angepasst ist, eine Bremskraft des mindestens einen weiteren Bremsaktuators (7a, 7b) zu regeln, wobei der mindestens eine weitere Bremsaktuator (7a, 7b) an der Vorderachse des Fahrzeugs (F) vorgesehen ist, wobei zwischen dem zweiten Bremsmodul (4) und jeweils dem mindestens einen weiteren Bremsaktuator (6a, 6b) jeweils ein Druckregelventil (6a, 6b) vorgesehen ist.

9. Bremssystem (B) gemäß einem der vorhergehenden Ansprüche, wobei der mindestens eine erste Drucksensor (9a, 9b) im ersten Bremsmodul (3) integriert ist.

## Claims

1. A braking system (B) for a vehicle (F), comprising:
a first pressure source (1b);
a footbrake valve (2) for receiving a deceleration request from the driver, which is connected to the first pressure source (1a);
a first braking module (3),
at least one brake actuator (5a, 5b), which is connected to the braking module (3),
wherein the first braking module (3) is adapted to control a braking force of the at least one brake actuator (5a, 5b) during each braking procedure, at least one first pressure sensor (9a, 9b), which is adapted to measure the set pressure of the footbrake valve (2),
**characterized in that** the braking system further comprises an axle-load determination device (11), which is adapted to determine an axle load,
wherein the axle-load determination device (11) is connected to the braking module (3), and the braking module (3) is adapted to take the axle load into account during the control.

2. The braking system (B) as claimed in claim 1, wherein the at least one first brake actuator (5a, 5b), whose braking force can be controlled, is provided on the rear axle of the vehicle.

3. The braking system (B) as claimed in claim 1 or 2, wherein the first pressure sensor (9a, 9b) is connected to the first braking module (3) and pressure values measured by the first pressure sensor (9a, 9b) can be read into the braking module (3).

4. The braking system (B) as claimed in one of the preceding claims, wherein the deceleration request can be controlled by two brake actuators (5a, 5b) with the aid of a respective solenoid valve (M) or relay valve (R), wherein the respective one solenoid valve (M) or relay valve (R) is preferably integrated into the first braking module (3).

5. The braking system (B) as claimed in claim 4, wherein in each case a further, second pressure sensor (8a, 8b) is provided between the solenoid valve (M) or relay valve (R) and the corresponding brake actuator (5a, 5b), which is adapted to measure the pressure set by the solenoid valve (M) or relay valve (R), wherein the second pressure sensors (8a, 8b) are connected to the first braking module (3).

6. The braking system (B) as claimed in one of the preceding claims, wherein the first braking module (3) is adapted to implement the control by using software functions, wherein, preferably, an anti-lock braking system, an electronic stability program and/or load-dependent control can be implemented.

7. The braking system (B) as claimed in one of the preceding claims, wherein the axle-load determination device (11) is an axle-load sensor.

8. The braking system (B) as claimed in claim 2, further comprising: a second pressure source (1b), which is likewise connected to the footbrake valve (2), a second braking module (4), which is likewise connected to the footbrake valve (2), at least one further brake actuator (7a, 7b), which is connected to the second braking module (4), wherein the second braking module (4) is adapted to control a braking force of the at least one further brake actuator (7a, 7b), wherein the at least one further brake actuator (7a, 7b) is provided on the front axle of the vehicle (F), wherein in each case a pressure control valve (6a, 6b) is provided between the second braking module (4) and the at least one further brake actuator (6a, 6b).

9. The braking system (B) as claimed in one of the preceding claims, wherein the at least one first pressure sensor (9a, 9b) is integrated into the first braking module (3).

## Revendications

1. Système de freinage (B) pour un véhicule (F) présentant :
une première source de pression (1b) ;
une soupape de frein à pied (2) pour la réception d'un souhait de décélération du conducteur qui est reliée à la première source de pression (1a) ;
un premier module de freinage (3),
au moins un actionneur de frein (5a, 5b) qui est relié au module de freinage (3),
dans lequel le premier module de freinage (3) est adapté afin de commander une force de freinage de l'au moins un actionneur de frein (5a, 5b) lors de chaque freinage, au moins un premier capteur de pression (9a, 9b) qui est adapté afin de mesurer la pression définie de la soupape de frein à pied (2),
**caractérisé en ce que** le système de freinage présente de plus un dispositif de détermination de charge d'essieu (11) qui est adapté afin de déterminer une charge d'essieu,
dans lequel le dispositif de détermination de charge d'essieu (11) est relié au module de freinage (3), et le module de freinage (3) est adapté afin de tenir compte de la charge d'essieu lors de la régulation.

2. Système de freinage (B) selon la revendication 1, dans lequel l'au moins un premier actionneur de frein (5a, 5b), dont la force de freinage peut être régulée, est prévu au niveau de l'essieu arrière du véhicule.

3. Système de freinage (B) selon la revendication 1 ou 2, dans lequel le premier capteur de pression (9a, 9b) est relié au premier module de freinage (3) et des valeurs de pression mesurées par le premier capteur de pression (9a, 9b) peuvent être lues dans le module de freinage (3).

4. Système de freinage (B) selon l'une quelconque des revendications précédentes, dans lequel le souhait de décélération peut être défini à l'aide respectivement d'une soupape magnétique (M) ou soupape relais (R) par deux actionneurs de frein (5a, 5b), dans lequel l'une soupape magnétique (M) ou soupape de relais (R) respectivement est de préférence intégrée dans le premier module de freinage (3).

5. Système de freinage (B) selon la revendication 4, dans lequel respectivement un autre second capteur de pression (8a, 8b) est prévu entre la soupape magnétique (M) ou la soupape de relais (R) et l'actionneur de frein (5a, 5b) correspondant, lequel est adapté afin de mesurer la pression définie par la soupape magnétique (M) ou la soupape de relais (R), dans lequel les seconds capteurs de pression (8a, 8b) sont reliés au premier module de freinage (3).

6. Système de freinage (B) selon l'une quelconque des revendications précédentes, dans lequel le premier module de freinage (3) est adapté afin de réaliser la régulation à l'aide de fonctions logicielles, dans lequel un système antiblocage, un programme de stabilité électronique et/ou une régulation dépendant de la charge peuvent de préférence être réalisés.

7. Système de freinage (B) selon l'une quelconque des revendications précédentes, dans lequel le dispositif de détermination de charge d'essieu (11) est un capteur de charge d'essieu.

8. Système de freinage (B) selon la revendication 2, présentant de plus : une seconde source de pression (1b) qui est aussi reliée à la soupape de frein à pied (2), un second module de freinage (4) qui est aussi relié à la soupape de frein à pied (2), au moins un autre actionneur de frein (7a, 7b) qui est relié au second module de freinage (4), dans lequel le second module de freinage (4) est adapté afin de commander une force de freinage de l'au moins un autre actionneur de frein (7a, 7b), dans lequel l'au moins un autre actionneur de frein (7a, 7b) est prévu au niveau de l'essieu avant du véhicule (F), dans lequel respectivement une soupape de régulation de pression (6a, 6b) est prévue entre le second module de freinage (4) et respectivement l'au moins un autre actionneur de frein (6a, 6b).

9. Système de freinage (B) selon l'une quelconque des revendications précédentes, dans lequel l'au moins un premier capteur de pression (9a, 9b) est intégré dans le premier module de freinage (3).
